# EUROPEAN PATENT APPLICATION

(11) **EP 4 745 040 A1**
(43) Date of publication of application: **20.05.2026**
(21) Application number: 25197685.8
(22) Date of filing: 22.08.2025
(51) Int. Cl.: B64D 43/00, G01C 23/00

(54) **DEVICE, SYSTEM, AND METHOD FOR FUEL USE OPTIMIZATION**

(30) Priority: 19.11.2024 US 202418952475
(71) Applicant: Textron Innovations Inc., Providence, Rhode Island 02903 (US)
(72) Inventor: PARSONS, Thomas Dewey, Fort Worth, TX 76109 (US)
(74) Representative: Barker Brettell LLP

(57) **Abstract**

A method, system, and device for optimizing fuel usage is provided. The system includes a gauge (1001), a first indicator (1010) on the gauge (1001) representing a current operating condition of a vehicle, and a second indicator (1020) on the gauge (1001) representing an operating condition of the vehicle that correlates with an optimal fuel efficiency of the vehicle in relation to the operating condition shown by the gauge (1001), where the second indicator (1020) is continually updated as ambient operating conditions change, and where the optimal fuel efficiency represents the minimum total fuel used to travel a non-zero distance based on current conditions in which the system is being operated.

## Description

### TECHNICAL FIELD

The present application relates in general to a system and method for the economic fuel optimization during aircraft operation.

### BACKGROUND

Many operators of a rotorcraft, or a fleet of rotorcraft, are under tremendous pressure to operate the rotorcraft as efficiently as possible due to the narrow margins of the particular business. Substantial expenses can include fuel costs, maintenance costs, part replacement cost, and rotorcraft downtime cost, for example.

With regard to fuel usage, operators of rotorcraft may make rather rudimentary analysis of their flight operations to make adjustments to their flight procedures to attempt a reduction in fuel consumption. Such an analysis may include flying a first flight regime between a departure site and a destination site, then later flying a second flight regime between the departure site and the destination site, then comparing the fuel consumption to determine which flight regime is optimal. Operators may also attempt to use manufacturing data to determine an approximate optimal flight speed, however, the optimal flight speed depends on a large number of factors, including vehicle gross weight, altitude, external temperatures, and the like, that make it difficult to determine the optimal flight speed to minimize fuel consumption over the course of a given trip.

Further, maintenance costs, part replacement costs, and rotorcraft downtime costs have typically been factored by analyzing historical operational data. However, such a practice produces only an approximate estimate and is very time consuming for the operator. Further, small operators may lack the experience and human capital required to perform the analysis. Accordingly, there is a need for a system and method which allows a rotorcraft operator to improve and optimize economic fuel usage of vehicles such as a rotorcraft.

### SUMMARY

In a first possible embodiments, a rotorcraft is provided including an instrument panel having one or more gauges showing currently operating conditions of the rotorcraft, a flight control computer, a calculation unit in communication with the flight control computer, and having one or more processors and at least one non-transitory computer readable memory connected to the one or more processors and including computer program code, where the at least one non-transitory computer readable memory and the computer program code are configured, with the one or more processors, to cause the rotorcraft to: receive sensor input to the flight control computer including at least one of outside ambient temperature or a pressure altitude, generate first information related to current power requirements for a range of airspeeds based on the received sensor input, generate second information related to current fuel flow required for a range of installed powers based on the received sensor input, generate third information indicating a total fuel burn related to a range of airspeeds for a non-zero first distance traveled based on at least the first information and the second information, determine a most effective fuel utilization airspeed correlated to a minimum total fuel burn based on the third information, and display at least one indicator on at least one gauge on the instrument panel related to the most effective fuel utilization airspeed or a power correlated to achieving the most effective fuel utilization airspeed.

In a second potential embodiment, a method is provided including receiving sensor and data inputs to a flight control computer including at least one of outside ambient temperature or a pressure altitude, generating first information related to current power requirements for a range of airspeeds based on the received sensor and data inputs, generating second information related to current fuel flow required for a range of installed powers based on the received sensor and data inputs, generating third information indicating a total fuel burn related to a range of airspeeds for a first distance traveled based on the first information and the second information, where the first distance traveled is greater than zero, determining a most effective fuel utilization airspeed correlated to a minimum total fuel burn based on the third information, and displaying at least one indicator on at least one gauge on an instrument panel in a rotorcraft related to the most effective fuel utilization airspeed or a power correlated to achieving the most effective fuel utilization airspeed.

In a third possible embodiments, a system is provided including a gauge, a first indicator on the gauge representing a current operating condition of a vehicle, and a second indicator on the gauge representing an operating condition of the vehicle that correlates with an optimal fuel efficiency of the vehicle in relation to the operating condition shown by the gauge, where the second indicator is continually updated as ambient operating conditions change, where the optimal fuel efficiency represents the minimum total fuel used to travel a non-zero distance based on current conditions in which the system is being operated.

### BRIEF DESCRIPTION OF THE DRAWINGS

For a more complete understanding of the presented principles, and the advantages thereof, reference is now made to the following descriptions taken in conjunction with the accompanying drawings, in which:
Figure 1 is a block diagram of flight systems in which the system and method may be implemented, according to some embodiments;
Figures 2A and 2B are diagrams of instruments panels, according to some embodiments;
Figure 3 is an exemplary fuel efficiency method, according to some embodiments;
Figure 4 is an exemplary illustration of manufacturing data for an airspeed - torque and/or installed power available relationship, according to some embodiments;
Figure 5 is an illustration of data generated for use in the fuel efficiency method, according to some embodiments;
Figure 6 is an exemplary illustration of manufacturing data for a power - fuel flow relationship, according to some embodiments;
Figures 7 and 8 are illustrations of data generated for use in the fuel efficiency method, according to some embodiments;
Figure 9 is an alternative illustration of an airspeed instrument, in accordance with some embodiments; and
Figure 10 is a combination airspeed and pressure altitude instrument, in accordance with some embodiments.

### DETAILED DESCRIPTION OF ILLUSTRATIVE EMBODIMENTS

Illustrative embodiments of the system of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms to describe a spatial relationship between various components or to describe the spatial orientation of aspects of such components should be understood to describe a relative relationship between the components or a spatial orientation of aspects of such components, respectively, as the device described herein may be oriented in any desired direction.

Embodiments of the presented principles are directed toward determining in real time an optimal airspeed based on the current conditions and environment of a vehicle to maximize fuel efficiency.

Certain embodiments of the disclosure are discussed within the context of rotary aircraft. However, it will be understood that the disclosure is not limited to only rotary aircraft. It will also be understood that the embodiments disclosed herein may be used with any aircraft, including fixed wing, rotorcraft, commercial, military, or civilian aircraft. Embodiments of the present disclosure are not limited to any particular rotary aircraft, and embodiments can be used in any setting or application such as with other aircraft, vehicles, or equipment.

Further, the aircraft can have a plurality of sensors configured to conduct and communicate a variety of measurements, such as a fuel gauge, fuel flow meter, air temperature sensor, altimeter, engine torque meter, gas producer speed sensor, gas temperature sensor, engine bleed air sensor, main rotor mast torque sensor, generator load gauge sensor, weapons deployed, and cargo hook load cell, to name a few. The aircraft also includes a cockpit with an instrument panel that may take on a wide variety of designs. For example, the instrument panel can have conventional analog gauges. In another embodiment, the instrument panel can have a "glass cockpit" design in which one or more instruments are digitized and graphically displayed on one or more screens.

The system and method of the present application can be utilized to optimize the operation of a flying vehicle in order reduce expenses related to fuel consumption. It should be appreciated that the system and method of the present application are not limited to manned aircraft; rather the system and method of the present application can be implemented on unmanned aircraft as well.

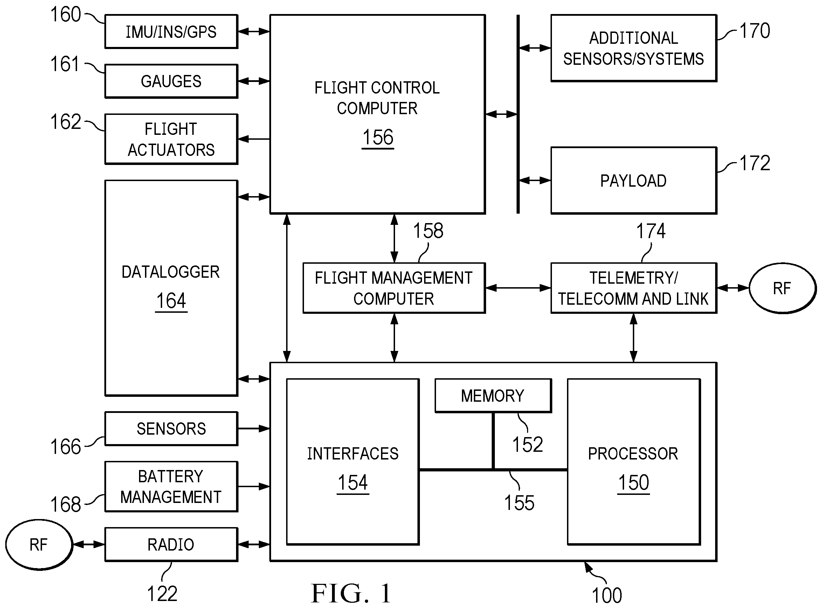

Figure 1 is a hardware diagram of flight systems in an aircraft, according to some embodiments. A controller 100 may include one or more processors 150 and one or more computer readable medium (such as memory 152) storing computer code thereon. References to computer-readable storage medium, computer program product, tangibly embodied computer program, or the like, or a controller, monitor, engine monitor, monitoring system, computer, processor, or the like should be understood to encompass not only computers having different architectures such as single or multiprocessor architectures and sequential (Von Neumann) or parallel architectures but also specialized circuits such as field-programmable gate arrays (FPGAs), application specific circuits (ASICs), signal processing devices and other devices. References to computer program, instructions, code, or the like, should be understood to encompass software for a programmable processor or firmware such as, for example, the programmable content of a hardware device whether instructions for a processor, or configuration settings for a fixed-function device, gate array or programmable logic device, or the like.

The controller 100 may have at least one processor 150 and at least one memory 152, such as a non-transitory computer readable medium, and may include computer program code, that is configured to, with the at least one processor, perform the method described herein. The memory 152 may be a single component or it may be implemented as one or more separate components some or all of which may be integrated or removable and may provide permanent, semi-permanent, dynamic, or cached storage.

The one or more processors 150 are configured to read from and write to the at least one memory 152. The processor may also comprise a bus 155 or an output interface via which data or commands are output by the processor 150 and an input interface via which data or commands are input to the processor 150. The memory 152 stores a computer program including computer program instructions that control the operation of controller 100, when loaded into the processor. The computer program instructions provide the logic and routines that enable the apparatus to perform the engine monitoring methods and implement the engine monitoring systems. The processor 150, by reading the memory 152, is able to load and execute the computer program. The computer program or programs may arrive at the apparatus via any suitable delivery mechanism. The delivery mechanism may be, for example, a computer-readable storage medium, a computer program product, a memory device, a record medium such as a compact disc read on only memory (CD-ROM), digital versatile disc (DVD), portable memory such as a memory stick or hard drive, or the like, an article of manufacture that tangibly embodies the computer program. In some embodiments, the delivery mechanism may be a signal configured to reliably transfer the computer program over the air or via an electrical connection.

The controller 100 may include additional interfaces 154 connected to the bus 155 through which data, information, and signaling from various subsystems may be fed into the controller 100 and stored into memory 152 or used by the processor 150. The various inputs to the controller 100 may include interfaces with a flight control computer 156, a flight management computer 158, radios 122, sensors 166, a battery management system 168, and telemetry, telecom, or wireless link data or information, according to some embodiments. Further, the controller 100 may be connected to an inertial measurement unit (IMU), an inertial navigation system (INS), and/or a global position system (GPS) 160, as well as a variety of gauges 161 and indicators providing visual and/or auditory information to the pilot and crew, flight actuators 162 that position aircraft control surfaces and linkages, additional systems and additional sensors 170, and payload systems 172, through the flight control computer 156 or directly, according to some embodiments. The gauges 161 may include fuel gauges, wind speed indicators, altimeters, compasses, directional navigation gauges, an instrument landing system (ILS) gauges, and the like. In some embodiments, the controller 100 may further have access to a data logger 164, black box, or the like, where access may be shared with the flight control computer 156. In some embodiments, the controller 100 may be integrated into the flight control computer 156. In some embodiments, the controller 100 and the flight control computer 156 may be the same device.

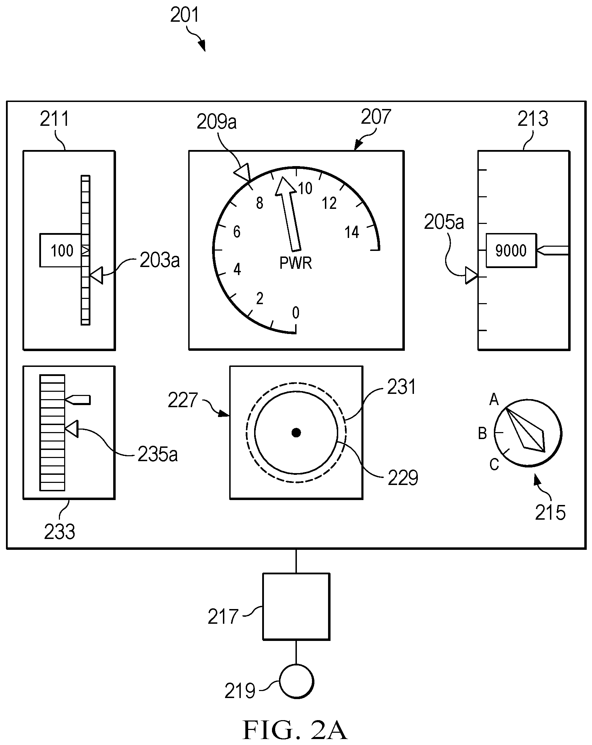

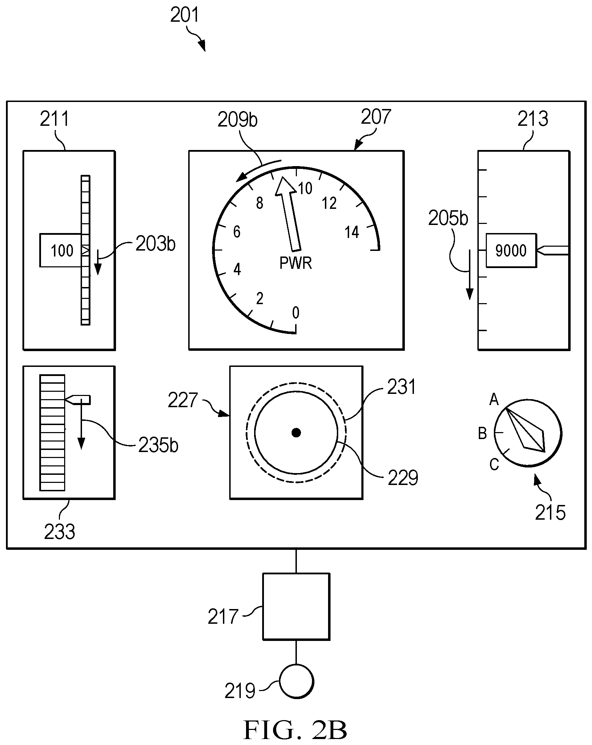

Figures 2A and 2B illustrate an instrument panel with different potential indicators, according to some embodiments. Instrument panel 201 can include any variety of implementation specific instruments for flying an aircraft. For clarity, some instruments on instrument panel 201 are not illustrated. Instrument panel 201 can be in communication with a calculation unit 217 (for example, the controller and/or the flight control computer) configured for performing one or more functions associated with a fuel efficiency method. Further, fuel efficiency method 300 can be processed in part or wholly within calculation unit 217. Further, one or more sensors 219 can be in data communication with calculation unit 217. In some embodiments, the sensors 219 can be any variety of sensors necessary for the calculation unit 217 to accurately calculate optimal configurations and conditions for the best fuel efficiency for the current conditions and perform to fuel efficiency method. Sensors 219 may include sensors and/or additional sensors.

Figure 2A illustrates an instrument panel 201 having absolute indicators, according to some embodiments. For example, absolute airspeed indicator 203a is an indicator on a true airspeed instrument 211 for communicating a recommended change in airspeed to improve fuel economy. For example, absolute airspeed indicator 203a may indicate a reduced speed for a maximum efficiency calculated by the calculation unit 217. It should be appreciated that absolute airspeed indicator 203a is merely illustrative of one potential embodiment that can be implemented to communicate a recommended airspeed to improve fuel economy, and other shapes and styles may be used.

In another embodiment, instrument panel 201 can include an absolute power indicator 209a associated with a power instrument 207 so as to communicate to the pilot that (as shown) a decreased (or increased) power point, defined by absolute power indicator 209a, would optimize fuel efficiency of the aircraft. In another embodiment, absolute power indicator 209a may be an indicator on a torque instrument that would cue the pilot to an increased or decreased torque point to arrive at an optimal operation. It should be appreciated that absolute power indicator 209a is merely illustrative of one potential embodiment that can be implemented to communicate a recommended power to improve fuel economy, and other shapes and styles may be used.

In some embodiments, an absolute altitude indicator 205a on an altimeter 213 may be included for communicating a recommended change in altitude to improve fuel economy. Typical rotorcraft may increase fuel efficiency by increasing altitude. Aircraft drag also decreases with increased altitude. For this reason, performance charts are created that document true airspeed versus power for various combinations of aircraft weight and density altitude. There can be an additional energy benefit to flying at a higher altitude in warm weather because the air conditioning requirements may be reduced or eliminated. However, if there is a 30 knot headwind at the altitude that the pilot believes is the optimal altitude (from a performance chart), but only a 10 knot headwind at an altitude 1000 feet lower, then it may be more efficient for the pilot to fly the aircraft 1000 feet lower in altitude, even though the performance chart indicated otherwise. In some embodiments, calculation unit 217, may receive sensor input, and data through telemetry and telecommunications links 174, or other sensors and communication mechanisms, to receive and analyze the atmospheric data. The calculation unit 217 may then provide absolute altitude indicator 205a on altimeter 213 to cue the pilot to (in the embodiment shown) a reduced altitude that may, for example, avoid a stronger headwind, thus realizing a gain in fuel efficiency. The atmospheric data, which can include wind speed, wind direction, and air temperature, for example, can be input from sensors 219, received via satellite data links during flight, or the like.

The instrument panel 201 may be configured to only show specific indicators at a time. For example, system can include prioritizing the cues to the pilot in accordance with most effective cue being displayed first. If the largest potential gain could be realized by a change in altitude, then either absolute altitude indicator 205a or relative altitude indicator 205b may be displayed. If the pilot determined that an altitude change was not practical or undesirable for some reason, then the pilot can make an input to prompt the second most effective cue or indicator to display in lieu of the first indicator.

The calculation unit 217 may also generate data to the flight control computer 156 (or the flight control computer 156 may itself where the calculation unit 217 is integrated into the flight control computer 156, or the flight control computer 156 is the same device as the calculation unit 217) and motors or the like to adjust flight controls, according to some embodiments, For example, a detent may be adjusted to indicated the proper position to achieve an optimal power setting for the best fuel efficiency.

A detent in flight controls provides a tactile feedback mechanism to pilots. The detent may act as a mechanical stop or a noticeable position within the range of a flight lever's movement, allowing pilots to recognize specific settings without having to look at the controls. By providing a physical indication, a detent helps prevent overcorrection or unintentional changes in the blade pitch, contributing to safer and more stable flight operations. In some embodiments, the detent may be a collective detent. In some embodiments, a motive force may be applied to specific flight controls to "push" the control to the optimal position to achieve the best airspeed for optimal fuel efficiency. In some embodiments, the motive force may be a force applied to the collective and/or the cyclic of a rotorcraft. In some embodiments, the detent, motive force, and/or any indicators on the instrument panel 201 may be disabled below a threshold speed and/or below a threshold altitude.

In addition to enhancing flight safety, the collective detent also aids in fuel efficiency and power management. Helicopters often have an optimal collective pitch setting for various flight conditions that balances lift requirements with engine power output and fuel consumption. The detent can be set at this optimal position, allowing pilots to quickly return to the most efficient pitch setting during flight. This feature reduces pilot workload and enhances situational awareness, as pilots can focus more on external flight conditions and less on the precise positioning of the collective lever.

In some embodiments, a selector input switch 215, or the like, can be located on the instrument panel 201 to allow the pilot to make selections to customize the output of the calculation unit 217. For examples, selector input switch 215 may have positions to select which instrument to output to, or an order of instruments to preferentially output the most efficient setting. In some embodiments, selector input switch 215 may be configured to preferentially make a recommendation to only a single instrument (e.g., the factor that may provide the most efficient change in fuel efficiency), or a variety of instruments (e.g., when a change in altitude and airspeed may both result in increased fuel efficiency). In some embodiments selector input switch 215 may have a setting allowing for selection of output of the maximum endurance speed for an aircraft instead of the maximum fuel efficiencies for travel. For example, the maximum endurance speed may be desired in the case of tour operations where a start and destination are the same. In some embodiments, the selector input switch 215 may have an input to exclude output to certain instruments. For example, recommended changes in altitude, or recommendations above/below specific altitudes, may be excluded (such as during touring operations when different altitudes are undesirable), or recommended changes to rotor speed may be excluded in favor of passenger comfort, and the like. In some embodiments, the selector input switch 215 may allow the pilot to disable recommended operational changes completely. In some embodiments, the selector input switch 215 may allow the pilot to enable or disable a detent position and/or motive force on flight controls. While several examples have been listed for specific capabilities of the selector input switch 215, and Figures 2A and 2B represent the selector input switch 215 with three positions, more or fewer positions for the selector input switch 215 may be realized, and the selector input switch 215 may take other forms such as an input keypad, buttons, and the like, or a combination of such elements. In some embodiments, the selector input switch may be a touch switch implemented in a glass cockpit display.

Figure 2B illustrates an instrument panel 201 having relative indicators, according to some embodiments. For example, relative airspeed indicator 203b is an indicator on a true airspeed instrument 211 for communicating a recommended change in airspeed to improve fuel economy. Relative airspeed indicator 203b is illustrated in a "reduce speed" cue. The length and or size of relative airspeed indicator 203b can be configured to communicate a magnitude of the recommended change in airspeed. For example, the root end of relative airspeed indicator 203b corresponds with the current airspeed, while the tip end of relative airspeed indicator 203b is indicative of what airspeed the pilot should achieve, in reference to the scale on the true airspeed instrument 211. In the illustrated state, relative airspeed indicator 203b is communicating a relatively small reduction in airspeed to improve fuel economy, as relative airspeed indicator 203b is relatively short in length. In the illustrated embodiment, relative airspeed indicator 203b is an arrow, where the tip end is the narrow end portion of the arrow. The relative airspeed indicator 203b can be larger at high speeds or higher power settings. It should be appreciated that relative airspeed indicator 203b is merely illustrative of variety of embodiments that can be implemented to communicate a recommended change in airspeed to improve fuel economy.

In an embodiment, instrument panel 201 can include a relative power indicator 209b associated with a power instrument 207 so as to communicate to the pilot that a decrease or increase in power, defined by relative power indicator 209b, would economically optimize fuel consumption in light of the aforementioned factors. In an alternative embodiment, the relative power indicator 209b may be an indicator on a torque instrument (not shown) that would cue the pilot to increase or decrease torque to arrive at an optimal fuel economy. The length and or size of relative power indicator 209b can be configured to communicate a magnitude of the recommended change in power. For example, the root end of relative power indicator 209b corresponds with the current power, while the tip end of relative power indicator 209b may indicative of what power the pilot should achieve, in reference to the scale on the power instrument 207. In the illustrated state, relative power indicator 209b is communicating a relatively large reduction in power to improve fuel economy, as relative power indicator 209b is relatively long in length. In the illustrated embodiment, relative power indicator 209b is an arrow, where the tip end is the narrow end portion of the arrow. The relative power indicator 209b can be larger at high speeds or higher power settings. It should be appreciated that the relative power indicator 209b is merely illustrative of variety of embodiments that can be implemented to communicate a recommended change in power to improve fuel economy.

A relative altitude indicator 205b is a relative indicator on an altimeter 213 for communicating a recommended change in altitude, according to some embodiments. For example, relative altitude indicator 205b is illustrated in a "reduce altitude" cue which communicates that operating costs will be reduced by reducing altitude. The length of relative altitude indicator 205b is relatively long, which can indicate that a large change in altitude would yield increased fuel economy. For example, the root end of relative altitude indicator 205b corresponds with the current altitude, while the tip end of relative altitude indicator 205b is indicative of what altitude the pilot should achieve, in reference to the scale on the altimeter 213. In the illustrated state, relative altitude indicator 205b is communicating a relatively large reduction in altitude to improve fuel economy, as relative altitude indicator 205b is relatively long in length. It should be appreciated that other styles of indicators can be used.

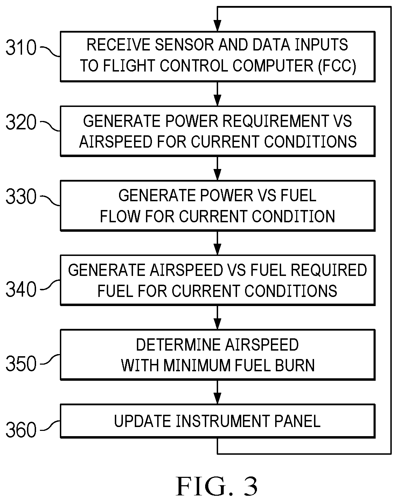

Figure 3 is flow diagram illustrating an exemplary fuel efficiency method 300 for determining an optimally fuel-efficient airspeed, according to some embodiments. In block 310, the calculation unit 217 (for example, the controller 100 and/or the flight control computer 156 in Figure 1) receives inputs from sensors 219. The sensors 219 may include outside air temperature, altitude, airspeed, fuel levels, weight sensors, fuel flow rates, and the like, according to some embodiments. In some embodiments, the altitude may be a pressure altitude derived from an outside air pressure, or may be an altitude from, for example, a GPS system. In some embodiments the weight sensors may be sensors in skids or landing gear providing a weight on skids, or weight on landing gear of the vehicle at the time of departure. In some embodiments, the vehicle gross weight may be determined in real-time in flight. The sensor 219 input to the calculation unit 217 may be signaling or data, and may be transferred via signal lines, data lines, a data bus, or the like. In some embodiments, the sensor 219 inputs may first be processed by input conditioning circuits or algorithms to filter out noise, and the like, and to provide more accurate inputs to the calculation unit 217.

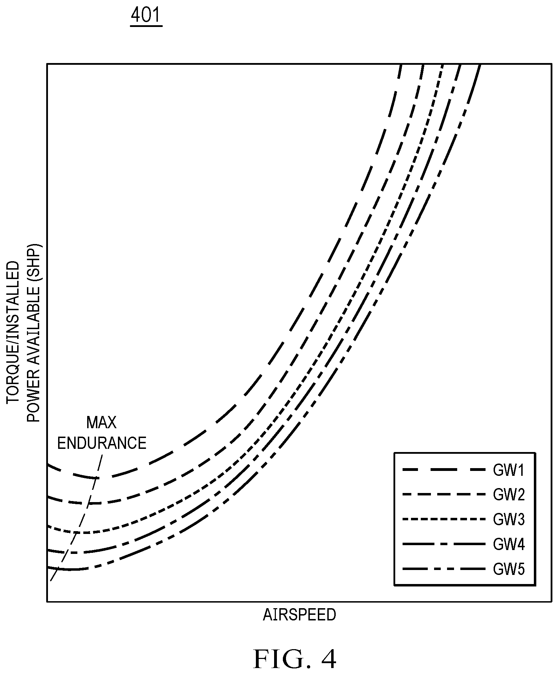

In block 320, the calculation unit 217 may generate real-time airspeed versus power (AvP) required data or information. The airspeed versus power required data or information may take the form of a chart, data table, or the like, for the current conditions. Operators/owners of aircraft typically have information provided from the manufacturer with charts or tables showing the engine torque, installed power available (SHP), and/or fuel flow required for a given airspeed at various pressure altitudes, outside air temperatures (OAT), and aircraft gross weights. Figure 4 shows an exemplary manufacturer chart 401 for airspeed versus torque and/or installed power available (SHP) for a rotorcraft. As can be seen in the chart, multiple curves may be provided for different vehicle gross weights with each curve being associated with a specific vehicle gross weight. More or less vehicle gross weight curves may be included (labeled as GW1, GW2, GW3, GW4, GW5 where GW1<GW2<GW3<GW4<GW5). In some embodiments, the airspeed versus torque and/or installed power available (SHP) data or information corresponds to a specific pressure altitude (such as 4000 feet), and a specific outside air temperature (for example, 7 degrees Celsius (°C)). Additional charts, graphs, information, or data may be provided by the manufacturer related to a variety of different pressure altitudes and outside ambient temperatures. Additional conditions may be relevant to the charts, graphs, information, or data such as wind speed, the status of miscellaneous equipment like a heater, and generator amperage, and the configuration details of the aircraft.

The minimum of each curve is intersected by a maximum endurance curve, representing the airspeed at which the aircraft could maintain flight for the longest duration, but this does not represent the maximum fuel efficiency for a given trip. For example, consider the scenario where a 200 mile trip is being planned. If the aircraft flew at the maximum endurance airspeed, the rate of fuel consumption would be minimized, but it would take longer to fly to a destination than a faster air speed having a higher fuel consumption. However, because the curve becomes steeper as airspeed increases (requiring more fuel consumption to generate a same proportional increase in airspeed), there is a point of diminishing returns on going faster at which the pace of fuel consumption overrides the reduced time of the trip. The best fuel economy for a given trip is thus normally greater than the maximum endurance speed, but less than the highest airspeed capability of the aircraft.

Typically, a pilot/operator would need to interpolate and extrapolate between the curves provided in vehicle manuals, and presume averages or expected environmental conditions to determine a best airspeed for a given trip. However, these are not real-time calculations, and the environmental conditions and other factors may change from the expected. Thus, a real-time calculation of a most economic airspeed for the given conditions is highly desirable information.

The information detailed by the graph in Figure 4 may be included in the memory 152 of the controller 100 such that the calculation unit 217 has access to the information on demand for a wide variety of environmental conditions, aircraft vehicle gross weights, and equipment configurations (e.g., generator amperage demands). The information regarding torque and/or installed power available (SHP) as a function of airspeed may be stored in the memory 152 though electronic representation of charts, lookup tables, multi-dimensional matrices, equations, or the like, or a combination of these information paradigms.

It is important to note that vehicle gross weight includes the weight of the aircraft itself, all passengers and crew, and fuel, as well as the weight of any modifications made to the aircraft. The weight of the passengers, crew, aircraft, and modifications should remain constant throughout a given flight, and may be entered or stored in memory 152 for access by the calculation unit 217. However, as fuel is consumed, the total current weight of the fuel will drop, reducing the vehicle gross weight over time. Thus, a vehicle gross weight measured, calculated, or entered at the time of departure needs to be adjusted for the weight of the used fuel to determine the current fuel flow requirements for a given aircraft at a specific point in time of a flight. The calculation unit may adjust the vehicle gross weight stored in memory as a function of the amount of fuel used, according to some embodiments. In some embodiments, the calculation unit 217 may maintain the original vehicle gross weight in memory and account the for weight of the used fuel based on the current fuel tank gauges or the amount of fuel expended to that point from the measure of the vehicle gross weight as an additional step or calculation prior to generating the power requirement versus airspeed chart, data table, or the like, for the current conditions.

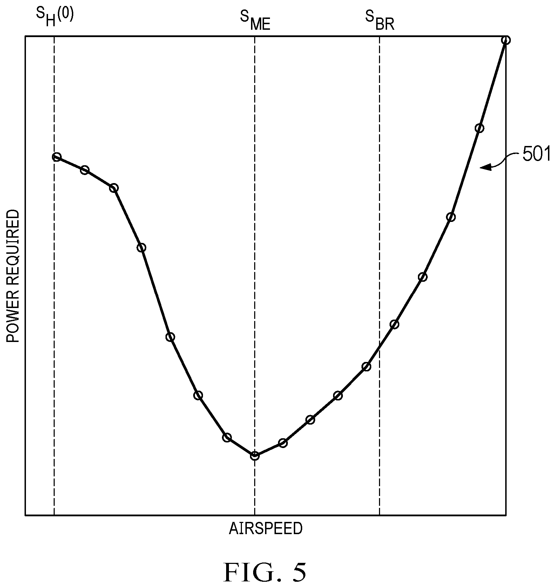

From the sensor inputs, including at least altitude and outside air temperature, as well as the current vehicle gross weight (accounting for the current total fuel weight), and the information related to the airspeed versus power required data or information from the manufacturer, the calculation unit 217, may generate the real-time power (SHP) versus airspeed data or information. An exemplary real-time power versus airspeed curve 501 is shown in Figure 5. The real-time power (SHP) versus airspeed data or information may be stored in the memory 152 by the calculation unit 217 though electronic representation of charts, lookup tables, multi-dimensional matrices, equations, or the like, or a combination of these information paradigm, that is readily readable or interpretable by the calculation unit 217.

The curve 501 shown in Figure 5 is exemplary for a rotary aircraft. The curve 501 may be called the "power curve" or "drag curve," and illustrates the relationship between the power required to sustain level flight and the airspeed of the helicopter for the current conditions. The horizontal Axis (x-Axis) represents the airspeed of the helicopter, usually in knots or miles per hour. The vertical Axis (y-Axis) represents the power required, typically in terms of engine power output or percentage of maximum power. At very low airspeeds, including hover (zero airspeed), the power required is relatively high due to the need to generate significant lift while overcoming induced drag (drag associated with producing lift). As the helicopter starts to move forward (increasing airspeed from a hover), it experiences translational lift, which reduces the induced drag. This results in a decrease in the power required with an increase in airspeed, up to a certain point. The maximum endurance speed (SME) is the lowest point on the curve and is the speed at which the power required is at its minimum. The maximum endurance speed represents the most efficient speed for the helicopter in terms of power consumption and is often used for endurance flying. However, as stated previously, this is not the most efficient speed for fuel consumption for a trip, merely to stay aloft for the longest period of time. Beyond the maximum endurance speed (SME) is the speed for the best range (SBR), where the helicopter can travel the farthest distance for a given amount of fuel. As the airspeed continues to increase, the power required rises due to increasing parasitic drag (drag not associated with lift, such as form drag and skin friction).

Returning back to Figure 3, in block 330, the calculation unit 217 will generate information related to power versus fuel flow for the current conditions, according to come embodiments.

The relationship between fuel flow and power in aircraft is significantly influenced by various environmental conditions such as altitude, temperature, and atmospheric pressure. At higher altitudes, the air density decreases, resulting in lower oxygen availability for combustion. In some embodiments, and for some types of engines, to maintain the same power output compensating for lower oxygen availability alone, some engines may need to increase fuel flow to compensate for the reduced oxygen, resulting in richer fuel mixtures. Conversely, at lower altitudes where the air is denser, some engines may operate with leaner fuel mixtures, thereby reducing the fuel flow required to achieve a given power output.

Temperature also plays a crucial role in this relationship. In hotter conditions (i.e., at lower altitudes generally), air density decreases, similar to the effects of higher altitude, leading to an increase in fuel flow to maintain power levels. Cold air, being denser, allows for more efficient combustion, often requiring less fuel flow for the same power output. Additionally, atmospheric pressure impacts fuel flow and power. Higher pressure, typically found at lower altitudes or in colder conditions, supports better combustion and efficiency, reducing the need for increased fuel flow. Conversely, lower pressure at higher altitudes or in warmer conditions necessitates higher fuel flow to achieve the desired power. These environmental variables must be carefully managed to optimize fuel efficiency and ensure the safe and effective operation of the aircraft.

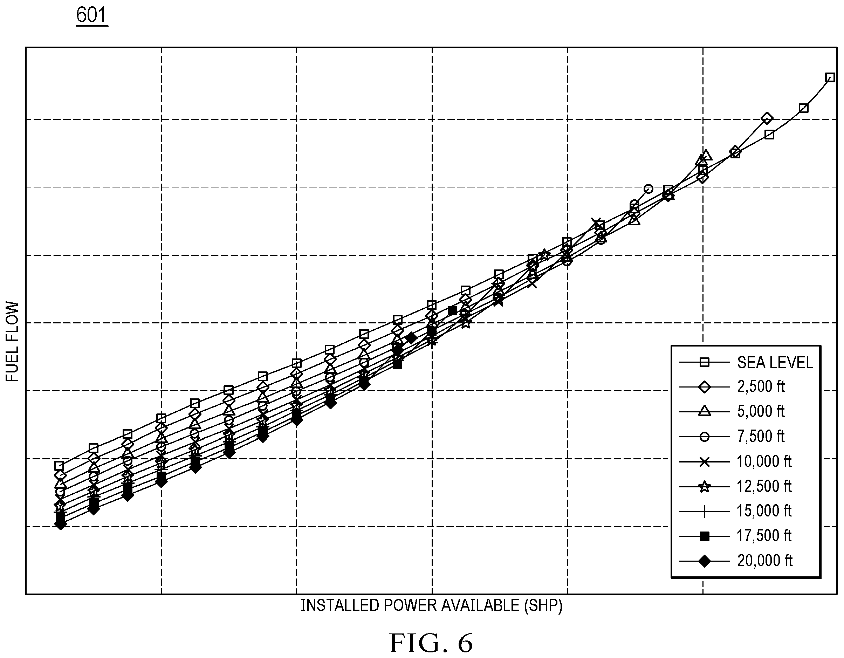

In some embodiments, the manufacturer will also provide data showing the expected fuel flow needed to achieve an installed power available. In some embodiments, the data provided by the manufacturer may incorporate or include data related to parts of the rotorcraft, such as engine thermodynamic performance model data or engine loading data of certain equipment. In other embodiments, the relationship between fuel flow and power may be determined in real-time based on sensor readings, and may account for vehicle or flying conditions, or the like. Figure 6 shows a manufacturer chart for an aircraft of installed power available versus fuel flow. As can be seen in the chart, multiple curves are provided for different altitudes. While the fuel flow versus installed power in Figure 6 is only shown as a factor of altitude, as stated above, other environmental conditions such as temperature, and atmospheric pressure, as well as different engine types (turboprop, conventional combustion, turbine, and the like) can affect the relationship shown in Figure 6. Collectively, the information detailed in Figures 4 and 6 may be referred to as manufacturer data.

The information detailed by the graph in Figure 6 may be included in the memory 152 of the controller 100 such that the calculation unit 217 has access to the information on demand for a wide variety of environmental conditions and equipment configurations (e.g., generator amperage demands). The information regarding fuel flow as a function of power may be stored in the memory 152 though electronic representation of charts, lookup tables, multi-dimensional matrices, equations, or the like, or a combination of these information paradigms.

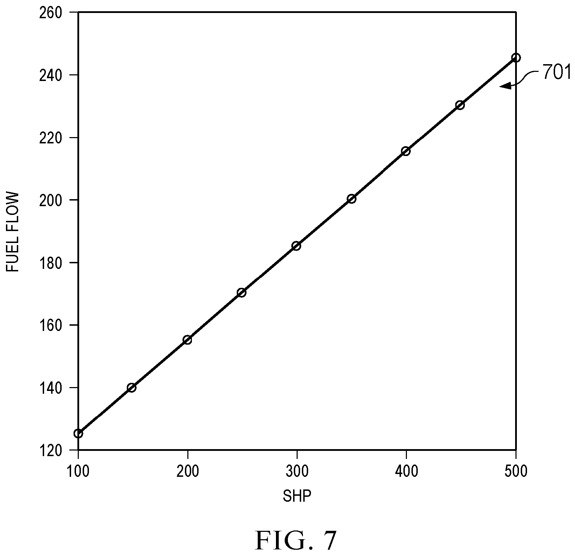

The calculation unit 217 may factor in each of the above-described variables, either through data received from sensors 219, or data received via satellite or telecom data links during flight, or the like, to determine a power (SHP) versus fuel flow information for the current environmental and situational conditions based on the manufacturer information stored in memory 152. For example, the calculation unit 217 may select a data set related to a particular altitude, pressure altitude, outside ambient temperature, aircraft configuration, and the like, received from sensors 219 for beginning the real-time calculations. In some embodiments, the calculation unit 217 may adjust the data set based on operational characteristics of the aircraft such as equipment configuration, current auxiliary equipment in use, wear and tear, and the like. Figure 7 shows a graph of current power versus fuel flow. For example, the information shown in Figure 7 may list the fuel flow in pounds per hour (lb/hr). However, any unit measurement may be used for both power and fuel flow by the calculation unit 217, and in the fuel efficiency method 300. The current power versus fuel flow curve 701 may be stored in the memory 152 though electronic representation of charts, lookup tables, multi-dimensional matrices, equations, or the like, or a combination of these information paradigm, that is readily readable or interpretable by the calculation unit 217. The current power versus fuel flow in Figure 7 is shown as a linear relationship for ease of representation, however, it should be understood that more complex relationships could be used.

Returning to Figure 3, in block 340, the calculation unit 217 generates information related to real-time airspeed versus total fuel burn (AvTFB) for the current conditions, according to some embodiments.

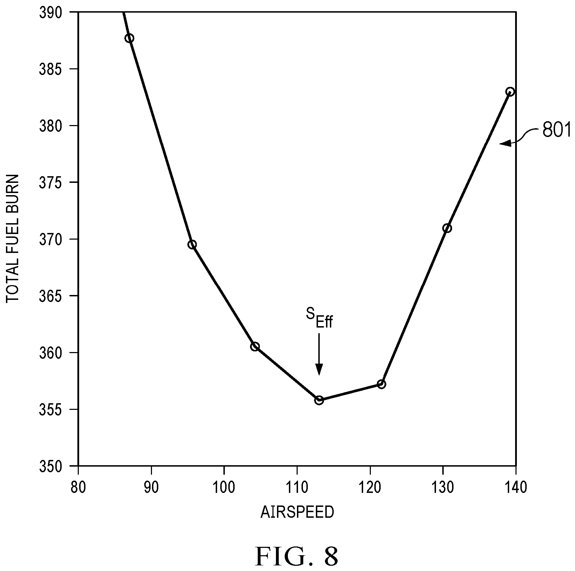

Figure 8 shows an exemplary graph representing real-time airspeed versus total fuel burn (AvTFB) based on current conditions. In one embodiment, the calculation unit may generate the data or information represented by Figure 8 for current conditions, and the data or information may be stored in the memory 152 by the calculation unit 217 though electronic representation of charts, lookup tables, multi-dimensional matrices, equations, or the like, or a combination of the same, that is readily readable or interpretable by the calculation unit 217. In general, for at least a rotorcraft the relationship between airspeed and total fuel burn for a given distance will have a u-shape similar to that depicted in Figure 8. For at least rotorcraft, the minimum of the real-time airspeed versus total fuel burn curve 801 shown in Figure 8 corresponds to the most effective fuel utilization airspeed (Seff) in relation to fuel consumption for a trip having a distance greater than zero. The real-time airspeed versus total fuel burn curve 801 is u-shaped as, at lower speeds, the total fuel burn (TFB) is high due to the long duration of the flight to get to the destination. As speed increases, efficiencies realized in forward flight and the shorter flight time results in the AvTFB curve 801 decreasing until a minimum point, the most effective fuel utilization airspeed (Seff). Beyond Seff, the increased power, and the associated fuel flow necessary to produce the increased power, overtake the efficiencies in forward flight and the reduced flight time such that the total fuel burn starts to increase again.

In some embodiments, the calculation unit 217 may generate data or information representing airspeed versus total fuel burn for current conditions based on either a trip distance input by the pilot or crew, or received from a GPS unit 160, the flight management computer 158, or the like, based on a trip plan or input destination. In another embodiment, the calculation unit 217 may generate data or information representing airspeed versus total fuel burn for current conditions based on a generic distance (e.g., 100 miles, or the like).

The calculation unit 217 may determine a first total time representing the time to travel the distance for a specific trip (or to cover the generic distance), by converting a first airspeed into groundspeed based on current wind speed and determining the first total time for the trip or to cover the generic distance. A first correlation may be performed, based on the data or information generated in block 320 of the fuel efficiency method 300 (and shown Figure 5 in graph format), to correlate the first airspeed into a first power required (SHP). The first correlation may be a data table lookup, a calculation, a matrix operation, or another determination of a relationship between the first airspeed and the first power required. The first power required may then be correlated to a first fuel flow based the data or information generated in block 330 of the fuel efficiency method 300 (and shown in Figure 7 in graph format) through a second correlation. The second correlation may be a data table lookup, a calculation, a matrix operation, or another determination of a relationship between the first power required and the first fuel flow. The first fuel flow may then be multiplied by the first total time to determine a total fuel burn required. The calculation unit may then repeat the process for a variety of speeds to generate the data or information shown in Figure 8. The real-time airspeed versus total fuel burn curve 801 may be stored in the memory 152 though electronic representation of charts, lookup tables, multi-dimensional matrices, equations, or the like, or a combination of the same, that is readily readable or interpretable by the calculation unit 217. The foregoing represents one potential means of generating the data or information related to total fuel burn for a specific airspeed. Other methods of calculating total fuel burn may be used.

Returning to Figure 3, in block 350, the calculation unit 217 determine the airspeed with the minimum fuel burn for the current conditions, according to some embodiments. In one embodiment, where the information related to airspeed versus total fuel burn for the current conditions is based on a series of discrete values of airspeeds with an associated total fuel burn value, the data may be sorted based on the total fuel burn value, and the minimum value may be selected. In another embodiment, where the information related to airspeed versus total fuel burn for the current conditions is based on equations, a derivative of the equation for airspeed versus total fuel burn may be determined, and then solved for zero, the solution or solutions may then be determined to be a minimum or a maximum. In another embodiment, where the shape of a curve is generally known, the calculation unit 217 may step through increasing airspeeds by a first step amount until a minimum is located. **In** some embodiments, the calculation unit may use a smaller second step amount to refine the value of the minimum total fuel burn, and a corresponding airspeed. While several examples of determining the minimum of the information related to airspeed versus total fuel burn for the current conditions, the exact mechanism for determining the minimum is not limiting and any applicable method may be used. The airspeed with the minimum total fuel burn may be termed the most effective fuel utilization airspeed (Seff). The calculation unit may store the most effective fuel utilization airspeed (Seff) in memory 152.

In block 360 of Figure 3, the calculation unit 217 will update the instrument panel 201 with data, information or signaling related to the most effective fuel utilization airspeed (Seff), a power correlated to achieve the most effective fuel utilization airspeed (Seff), and/or a range based on the calculated fuel burn correlated to the most effective fuel utilization airspeed (Seff) and the remaining fuel capacity, and other information, data, or signaling necessary, based on the position of the selector input switch 215. In some embodiments, the calculation unit 217 may also send information, data, or signaling to the flight control computer 156 (where the calculation unit 217 is separate from the flight control computer 156), to activate the detent and/or motive force in the appropriate flight controls.

In some embodiments, as shown in Figure 3, the fuel efficiency method 300 may be repeated as needed, or otherwise executed in an loop based on a first time period. In some embodiments, the calculation unit may determine most effective fuel utilization airspeed (Seff) automatically and continually update Seff as a function of OAT, HP, and GW. In some embodiments, the calculation unit 217 may start a timer at the beginning of executing the fuel efficiency method 300. At the latter of the timer reaching the first time period, or finishing the previous execution of the fuel efficiency method 300, the calculation unit may again begin a further iteration of the fuel efficiency method 300 starting back at block 310. In some embodiments the first time period may be 50 ms. In some embodiments, the first time period may be related to a display frame rate of the instrument panel 201 or specific instruments in instrument panel 201.

As an exemplary situation, for a helicopter traveling at 5000 feet with an outside air temperature of 7 degrees Celsius (7°C) with an original vehicle gross weight of 3400 pounds and 400 pounds of fuel burned so far, the following describes the process by the system and method described above. Altitude sensors and outside ambient temperature sensors 219 may detect the current pressure altitude and outside ambient temperature, relatively, and send information or data to the calculation unit 217 indicating the pressure altitude and outside ambient temperature. Based on the sensed altitude and temperature, the calculation unit 217 may retrieve manufacturer airspeed versus torque and/or installed power available (SHP) data from memory 152. The calculation unit may determine the current vehicle gross weight of 3000 pounds (3400 pounds at takeoff minus 400 pounds of fuel used), and further select or generate data for the current conditions of the helicopter. In some cases, this may involve interpolating by the calculation unit between data sets for different vehicle gross weights, different pressure altitudes, and/or different outside ambient temperatures where there is no manufacturer data for airspeed versus torque and/or installed power available (SHP) for the exact current conditions. The calculation unit may further adjust the manufacturer data for airspeed versus torque and/or installed power available (SHP)to account for the current configuration of the helicopter such as wear and tear, running auxiliary equipment, and the like. This yields real-time airspeed versus power required information or data that may be stored by the calculation unit in memory 152.

The calculation unit may further retrieve manufacturing data from memory 152 related to an installed power available versus fuel flow for the helicopter based on the currently sensed pressure altitude. In the event that no manufacturing data exists for the exact current pressure altitude, the calculation unit 217 may again interpolate between data sets of manufacturing data for installed power available versus fuel flow closest to the current pressure altitude. The calculation unit may further adjust the manufacturer data for installed power available versus fuel flow to account for the current configuration of the helicopter such as wear and tear, running auxiliary equipment, and the like. This yields real-time installed power available versus fuel flow information or data that may be stored by the calculation unit in memory 152.

The calculation unit then uses the real-time airspeed versus power required information or data and the real-time installed power available versus fuel flow information or data, along with a flight distance, to generate data indicating real-time total fuel burn required for a range of airspeeds to travel the flight distance. A minimum total fuel burn is located in the generated data indicating real-time total fuel burn required for the range of airspeeds, and the associated airspeed determined. The associated airspeed will be the most effective fuel utilization airspeed (Seff). The calculation unit 217 may then send data or signaling to the instrument panel 201 indicating the most effective fuel utilization airspeed (Seff).

The instrument panel may then show an indicator on true airspeed instrument 211 indicating the most effective fuel utilization airspeed (Seff). In some embodiments, the most effective fuel utilization airspeed (Seff) may be correlated to a power setting, and the calculation unit 217 may further send signaling to the instrument panel to position an indicator on power instrument 207 correlated with achieving the most effective fuel utilization airspeed (Seff). In some embodiments, the calculation unit 217 may further analyze total fuel burn for the trip at a range of different altitudes above and below the current altitude, and provide signaling or data to the instrument panel 201 to display an indication on altimeter 213 if a different altitude would result in a lower total fuel burn.

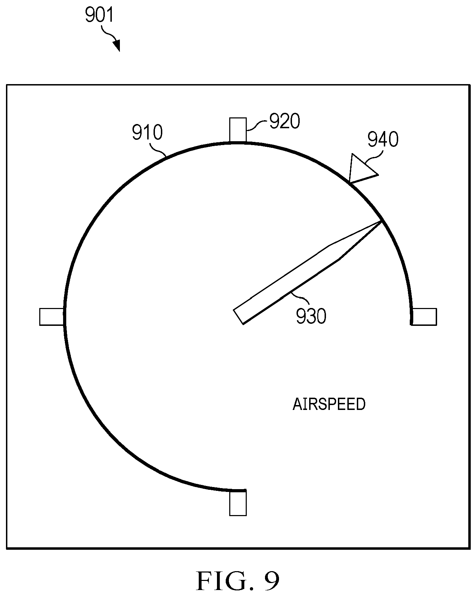

Figure 9 illustrates an alternative airspeed gauge 901 in accordance with at least one embodiment. In the illustrated embodiment, airspeed gauge 901 has a circular ring 910 with markings 920 corresponding to increasing airspeeds from a lowest indicated airspeed at the 6 o'clock position on airspeed gauge 901 increasing in a clockwise direction to a maximum indicated airspeed at the 3 o'clock position on airspeed gauge 901. An indicator needle 930 rotates around a central point with the arrow correlating to the current measured airspeed. An absolute recommended airspeed indicator 940 is an indicator for communicating a recommended change in airspeed to improve fuel economy. It should be appreciated that absolute recommended airspeed indicator 940 is merely illustrative of one potential embodiment that can be implemented to communicate a recommended airspeed to improve fuel economy, and other shapes and styles may be used. Additionally, a relative recommended airspeed indicator may be utilized similar to discussed above in relation to, for example, relative airspeed indicator 203b.

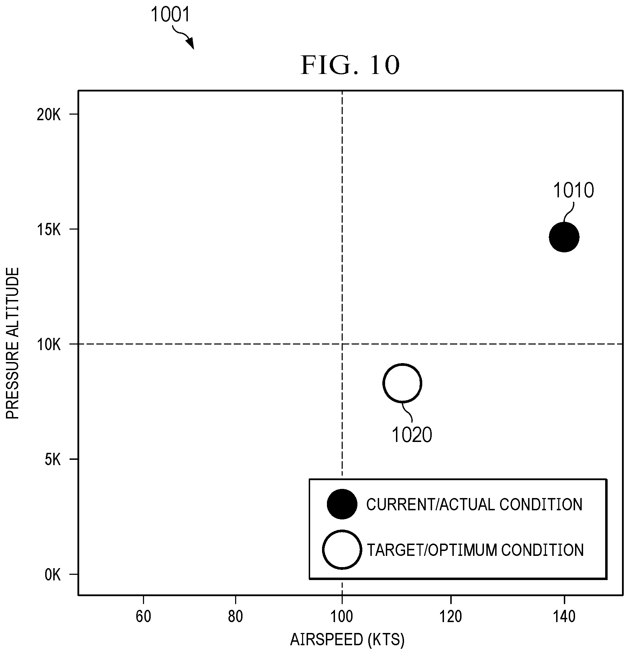

In some embodiments, gauges on the instrument panel 201 may be combination gauges. For example, Figure 10 shows a combination airspeed versus pressure altitude gauge 1001. In the embodiment shown, the current operating position 1010 is represented as a solid dot, and the recommended operating position is represented as an empty circle. However, the exact types of indicators may be varied as long as it is clear which indicates the current operating conditions, and which is indicates the recommended operating conditions.

The controller 100, flight control computer 156, and/or the calculation unit 217 may take the form of a printed circuit board assembly in accordance with some embodiments. The controller 100, flight control computer 156, and/or the calculation unit 217 may have a mainboard and a processing system disposed on the mainboard. In some embodiments, the controller 100, flight control computer 156, and/or the calculation unit 217 may share the same mainboard, or may comprise a single shared processing system on the mainboard. The mainboard and processing system may have receptacles such as slots, plugs, pin headers, and the like, for connecting various modules. Further, the mainboard may facilitate the electrical connections between the various system modules and the processing system. The mainboard may include other modules and cabling in some embodiments, such as wired or wireless communication chips, power converters, or the like. The mainboard may include connection pins and one or more connectors. The connectors may be, for example, terminal blocks, pin headers, plugs, or the like that permit connection of wires or plugs to the controller for digital and analog inputs and outputs. Additionally, the mainboard may have more connectors, such as pin headers, solder pads, or the like, for connecting wires, cabling, plugs or the like, for digital or analog inputs and outputs. In some embodiments, the connectors may be for serial bus outputs such as universal asynchronous receiver/transmitter (UART) protocol communication, serial peripheral interface (SPI) protocol communication, inter-integrated circuit (I2C, IIC) protocol communication, controller area network (CAN) bus, or another serial communication protocol.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments of this application.

Functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for indicating a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (ROM), a random access memory (RAM), a magnetic disk, or an optical disc.

All or some of the foregoing embodiments may be implemented by software, hardware, firmware, or any combination thereof. When software is used to implement embodiments, all or some of the embodiments may be implemented in a form of a computer program product. The computer program product includes one or more computer program instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid-state drive), or the like.

In a first possible embodiments, a rotorcraft is provided including an instrument panel having one or more gauges showing currently operating conditions of the rotorcraft, a flight control computer, a calculation unit in communication with the flight control computer, and having one or more processors and at least one non-transitory computer readable memory connected to the one or more processors and including computer program code, where the at least one non-transitory computer readable memory and the computer program code are configured, with the one or more processors, to cause the rotorcraft to: receive sensor input to the flight control computer including at least one of outside ambient temperature or a pressure altitude, generate first information related to current power requirements for a range of airspeeds based on the received sensor input, generate second information related to current fuel flow required for a range of installed powers based on the received sensor input, generate third information indicating a total fuel burn related to a range of airspeeds for a non-zero first distance traveled based on at least the first information and the second information, determine a most effective fuel utilization airspeed correlated to a minimum total fuel burn based on the third information, and display at least one indicator on at least one gauge on the instrument panel related to the most effective fuel utilization airspeed or a power correlated to achieving the most effective fuel utilization airspeed.

In some embodiments, the first information is generated based on manufacturer data representing airspeed versus fuel flow, a vehicle gross weight of the rotorcraft, a sensed pressure altitude for the rotorcraft, and a sensed outside ambient air temperature of the rotorcraft. In some embodiments, the second information is generated based on manufacturer data representing fuel flow as a function of installed power available for the rotorcraft based on a current operating altitude of the rotorcraft, and a sensed outside ambient air temperature of the rotorcraft. In some embodiments, the instrument panel further includes a selector input switch that configures whether indicators related to the most effective fuel utilization airspeed and the power correlated to achieving the most effective fuel utilization airspeed are displayed. In some embodiments, the instrument panel includes a combination gauge showing pressure altitude and airspeed, and where the combination gauge indicates a most effective fuel utilization speed and most effective fuel utilization altitude to minimize total fuel burn for a non-zero distance trip. In some embodiments, the first distance traveled is one of a default distance or a distance entered in relation to a flight plan. In some embodiments, the at least one indicator is one of an absolute indicator or a relative indicator. In some embodiments, the calculation unit is integrated into the flight control computer.

In a second potential embodiment, a method is provided including receiving sensor and data inputs to a flight control computer including at least one of outside ambient temperature or a pressure altitude, generating first information related to current power requirements for a range of airspeeds based on the received sensor and data inputs, generating second information related to current fuel flow required for a range of installed powers based on the received sensor and data inputs, generating third information indicating a total fuel burn related to a range of airspeeds for a first distance traveled based on the first information and the second information, where the first distance traveled is greater than zero, determining a most effective fuel utilization airspeed correlated to a minimum total fuel burn based on the third information, and displaying at least one indicator on at least one gauge on an instrument panel in a rotorcraft related to the most effective fuel utilization airspeed or a power correlated to achieving the most effective fuel utilization airspeed.

In some embodiments, the first information is generated based on manufacturer data representing airspeed versus fuel flow for a vehicle gross weight of the rotorcraft, a vehicle gross weight of the rotorcraft, a sensed pressure altitude for the rotorcraft, and a sensed outside ambient air temperature of the rotorcraft. In some embodiments, the second information is generated based on manufacturer data representing fuel flow as a function of installed power available for the rotorcraft based on an operating altitude of the rotorcraft, and a sensed outside ambient air temperature of the rotorcraft. In some embodiments, method further includes receiving input from a selector switch on the instrument panel, and configuring which indicators related to the most effective fuel utilization airspeed or the power correlated to achieving the most effective fuel utilization airspeed are displayed on the instrument panel. In some embodiments, method further includes displaying, on a combination gauge for pressure altitude and airspeed on the instrument panel, a most effective fuel utilization airspeed and most effective fuel utilization altitude correlated to a minimum total fuel burn for the first distance traveled.

In a third possible embodiments, a system is provided including a gauge, a first indicator on the gauge representing a current operating condition of a vehicle, and a second indicator on the gauge representing an operating condition of the vehicle that correlates with an optimal fuel efficiency of the vehicle in relation to the operating condition shown by the gauge, where the second indicator is continually updated as ambient operating conditions change, where the optimal fuel efficiency represents the minimum total fuel used to travel a non-zero distance based on current conditions in which the system is being operated.

In some embodiments, the gauge is a true airspeed gauge in a rotorcraft, the first indicator indicates a current true airspeed of the rotorcraft, and second indicator is an absolute value indicator that indicates a most effective fuel utilization airspeed based on at least one of a sensed outside ambient temperature or a sensed pressure altitude. In some embodiments, the gauge is a true airspeed gauge in a rotorcraft, the first indicator indicates a current true airspeed of the rotorcraft, and the second indicator is a relative value indicator that indicates a change in airspeed necessary to achieve a most effective fuel utilization airspeed based on at least one of a sensed outside ambient temperature or a sensed pressure altitude. In some embodiments, the gauge is one of an altimeter, an airspeed gauge, or a power gauge in a rotorcraft. In some embodiments, the gauge is a combination gauge representing two or more operating conditions of the vehicle. In some embodiments, the two or more conditions represented are pressure altitude and airspeed, the first indicator indicates a current true airspeed and pressure altitude of a rotorcraft, the second indicator indicates a most effective fuel utilization airspeed and pressure altitude based on at least one of a sensed outside ambient temperature, a sensed pressure altitude, or air column data. In some embodiments, the optimal fuel efficiency of the vehicle in relation to the operating condition shown by the gauge is based at least on manufacturer data correlating between airspeed and fuel flow for different gross weights of the vehicle, manufacturer data correlating between installed power available and fuel flow for different altitudes, a sensed current temperature of the air outside the vehicle, and a sensed current altitude of the vehicle.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. An aircraft, comprising:
an instrument panel having one or more gauges showing currently operating conditions of the aircraft;
a flight control computer;
a calculation unit in communication with the flight control computer, and having one or more processors and at least one non-transitory computer readable memory connected to the one or more processors and including computer program code, wherein the at least one non-transitory computer readable memory and the computer program code are configured, with the one or more processors, to cause the aircraft to:
receive sensor input to the flight control computer comprising at least one of outside ambient temperature or a pressure altitude;
generate first information related to current power requirements for a range of airspeeds based on the received sensor input;
generate second information related to current fuel flow required for a range of installed powers based on the received sensor input;
generate third information indicating a total fuel burn related to a range of airspeeds for a non-zero first distance traveled based on at least the first information and the second information;
determine a most effective fuel utilization airspeed correlated to a minimum total fuel burn based on the third information; and
display at least one indicator on at least one gauge on the instrument panel related to the most effective fuel utilization airspeed or a power correlated to achieving the most effective fuel utilization airspeed.

2. A method comprising:
receiving sensor and data inputs to a flight control computer comprising at least one of outside ambient temperature or a pressure altitude;
generating first information related to current power requirements for a range of airspeeds based on the received sensor and data inputs;
generating second information related to current fuel flow required for a range of installed powers based on the received sensor and data inputs;
generating third information indicating a total fuel burn related to a range of airspeeds for a first distance traveled based on the first information and the second information, wherein the first distance traveled is greater than zero;
determining a most effective fuel utilization airspeed correlated to a minimum total fuel burn based on the third information; and
displaying at least one indicator on at least one gauge on an instrument panel in an aircraft related to the most effective fuel utilization airspeed or a power correlated to achieving the most effective fuel utilization airspeed.

3. The aircraft according to claim 1, wherein the first information is generated based on manufacturer data representing airspeed versus fuel flow, a vehicle gross weight of the aircraft, a sensed pressure altitude for the aircraft, and a sensed outside ambient air temperature of the aircraft; or
the method according to claim 2, wherein the first information is generated based on manufacturer data representing airspeed versus fuel flow for a vehicle gross weight of the aircraft, a vehicle gross weight of the aircraft, a sensed pressure altitude for the aircraft, and a sensed outside ambient air temperature of the aircraft.

4. The aircraft according to claim 1 or claim 3, or the method according to claim 2 or claim 3, wherein the second information is generated based on manufacturer data representing fuel flow as a function of installed power available for the aircraft based on a current operating altitude of the aircraft, and a sensed outside ambient air temperature of the aircraft.

5. The aircraft according to claim 1, claim 3 or claim 4, wherein the instrument panel further includes a selector input switch that configures whether indicators related to the most effective fuel utilization airspeed and the power correlated to achieving the most effective fuel utilization airspeed are displayed; or
the method according to any of claims 2 to 4, further comprising:
receiving input from a selector switch on the instrument panel; and
configuring which indicators related to the most effective fuel utilization airspeed or the power correlated to achieving the most effective fuel utilization airspeed are displayed on the instrument panel.

6. The aircraft according to any of claim 1 or claims 3 to 5, wherein the instrument panel includes a combination gauge showing pressure altitude and airspeed, and wherein the combination gauge indicates a most effective fuel utilization speed and most effective fuel utilization altitude to minimize total fuel burn for a non-zero distance trip; or
the method according to any of claims 2 to 5, further comprising displaying, on a combination gauge for pressure altitude and airspeed on the instrument panel, a most effective fuel utilization airspeed and most effective fuel utilization altitude correlated to a minimum total fuel burn for the first distance traveled.

7. The aircraft according to any preceding aircraft claim, wherein the first distance traveled is one of a default distance or a distance entered in relation to a flight plan.

8. The aircraft according to any preceding aircraft claim, wherein:
the at least one indicator is one of an absolute indicator or a relative indicator; and/or
the calculation unit is integrated into the flight control computer.

9. A system comprising:
a gauge;
a first indicator on the gauge representing a current operating condition of a vehicle; and
a second indicator on the gauge representing an operating condition of the vehicle that correlates with an optimal fuel efficiency of the vehicle in relation to the operating condition shown by the gauge, wherein the second indicator is continually updated as ambient operating conditions change;
wherein the optimal fuel efficiency represents the minimum total fuel used to travel a non-zero distance based on current conditions in which the system is being operated.

10. The system according to claim 9, wherein the gauge is a true airspeed gauge in an aircraft, the first indicator indicates a current true airspeed of the aircraft, and second indicator is an absolute value indicator that indicates a most effective fuel utilization airspeed based on at least one of a sensed outside ambient temperature or a sensed pressure altitude.

11. The system according to claim 9 or claim 10, wherein the gauge is a true airspeed gauge in an aircraft, the first indicator indicates a current true airspeed of the aircraft, and the second indicator is a relative value indicator that indicates a change in airspeed necessary to achieve a most effective fuel utilization airspeed based on at least one of a sensed outside ambient temperature or a sensed pressure altitude.

12. The system according to any of claims 9 to 11, wherein the gauge is one of an altimeter, an airspeed gauge, or a power gauge in an aircraft.

13. The system according to any of claims 9 to 11, wherein the gauge is a combination gauge representing two or more operating conditions of the vehicle.

14. The system according to claim 13, wherein the two or more conditions represented are pressure altitude and airspeed, the first indicator indicates a current true airspeed and pressure altitude of an aircraft, the second indicator indicates a most effective fuel utilization airspeed and pressure altitude based on at least one of a sensed outside ambient temperature, a sensed pressure altitude, or information or data for different altitudes of an air column in which the aircraft is operating.

15. The system according to any of claims 9 to 14, wherein the optimal fuel efficiency of the vehicle in relation to the operating condition shown by the gauge is based at least on manufacturer data correlating between airspeed and fuel flow for different gross weights of the vehicle, manufacturer data correlating between installed power available and fuel flow for different altitudes, a sensed current temperature of the air outside the vehicle, and a sensed current altitude of the vehicle.
